# EUROPEAN PATENT APPLICATION

(11) **EP 3 605 682 A1**
(43) Date of publication of application: **05.02.2020**
(21) Application number: 18774358.8
(22) Date of filing: 02.04.2018
(51) Int. Cl.: H01M 4/96, H01M 4/88, H01M 8/10

(54) **CARBON MATERIAL FOR CATALYST CARRIER OF SOLID POLYMER FUEL CELL, AND METHOD FOR MANUFACTURING SAME**

(30) Priority: 31.03.2017 JP 2017070830
(71) Applicant: Nippon Steel Corporation, Tokyo 100-8071 (JP); NIPPON STEEL Chemical & Material Co., Ltd., Tokyo 103-0027 (JP)
(72) Inventor: IIJIMA, Takashi, Tokyo 100-8071 (JP); TADA, Wakana, Tokyo 103-0027 (JP); MASAKI, Kazuyoshi, Tokyo 103-0027 (JP)
(74) Representative: Vossius & Partner Patentanwälte Rechtsanwälte mbB
(86) International application number: PCT/JP2018/014174
(87) International publication number: WO 2018/182047

(57) **Abstract**

A carbon material for a catalyst carrier of a polymer electrolyte fuel cell a porous carbon material with a three-dimensionally branched three-dimensional dendritic structure, has a branch diameter of 81 nm or less, and simultaneously satisfies conditions (A) and (B) whereby: (A) a BET specific surface area S_{BET} is from 400 to 1500 m²/g; and (B) with respect to a relationship between a mercury pressure P_{Hg} and a mercury absorption amount V_{Hg} measured by mercury porosimetry, an increment ΔV_{Hg:4.3-4.8} of the measured mercury absorption amount V_{Hg} is from 0.82 to 1.50 cc/g in a case in which the common logarithm Log P_{Hg} of the mercury pressure P_{Hg} has increased from 4.3 to 4.8. A method of producing this kind of a carbon material for a catalyst carrier is also provided.

## Description

### Technical Field

The present invention relates to a carbon material for a catalyst carrier of a polymer electrolyte fuel cell and a method of producing the same.

### Background Art

In recent years, polymer electrolyte fuel cells, which can operate at a low temperature of 100°C or less, have come under increased scrutiny, and the development and commercialization thereof as driving power sources for vehicles, and as stationary power generation devices, has proceeded. The basic structure (unit cell) of a general polymer electrolyte fuel cell is: a membrane electrode assembly (MEA) configured by a proton conductive electrolyte membrane sandwiched by a catalyst layer on each side, the catalyst layers respectively functioning as an anode or a cathode; a gas diffusion layer disposed on the outer side of each catalyst layer, thereby sandwiching the MEA; and a separator disposed on an outer side of each gas diffusion layer. In general, a polymer electrolyte fuel cell has a structure in which as many unit cells as are necessary to achieve the required output. are stacked

In this kind of unit cell of a polymer electrolyte fuel cell, on the cathode side, an oxidative gas such as oxygen or air, and on the anode side, a fuel such as hydrogen, are supplied through gas channels in the separators disposed on the anode side and the cathode side, respectively. When the supplied oxidative gas and fuel (these are occasionally referred to as "reactive gases") are respectively supplied to the catalyst layers through the gas diffusion layers, work may be generated by utilizing an energy difference (electric potential difference) between the chemical reaction occurring in the anode catalyst layer and the chemical reaction occurring in the cathode catalyst layer. For example, when hydrogen gas is used as the fuel, and oxygen gas is used as the oxidative gas, the energy difference (electric potential difference) between the chemical reaction occurring in the anode catalyst layer [oxidation reaction: H₂ → 2H⁺ + 2e⁻ (E₀ = 0 V)] and the chemical reaction occurring in the cathode catalyst layer [reduction reaction: O₂ + 4H⁺ + 4e⁻ → 2H₂O (E₀ = 1.23 V)] is generated as work.

In this regard, for a catalyst that causes the chemical reaction by forming the catalyst layer as described above, a porous carbon material is usually used as a catalyst carrier from the viewpoints of electron conductivity, chemical stability, and electrochemical stability. Meanwhile, as a catalyst metal, Pt or a Pt alloy, which can be used in a strongly acidic environment, and whitch exhibits high reactivity with respect to both the oxidation reaction and the reduction reaction, is mainly used. Further, with respect to the catalyst metal, since the oxidation reaction and the reduction reaction generally occur on the catalyst metal, in order to increase the utilization rate of the catalyst metal, it is necessary to increase the specific surface area with respect to mass. For this reason, particles having a size of about several nanometers are usually used as the catalyst metal.

With respect to a catalyst carrier carrying this kind of a catalyst metal, in order to increase the carrying capacity of the carrier, (namely in order to increase the number of sites for adsorbing and carrying a catalyst metal having a size of about several nanometers), it is important that the carrier is a porous carbon material having a large specific surface area. Further, the porous carbon material is required to have a large mesopore volume (volume of mesopores with a pore diameter of from 2 to 50 nm), in order to support the catalyst metal in a state that is dispersed to the greatest extent possible. At the same time, when the catalyst layer to serve as the anode or the cathode is formed, it is necessary to diffuse the reactive gas supplied into the catalyst layer without resistance, and to discharge the water generated in the catalyst layer (produced water) without delay. For this purpose, it is important to form micropores in the catalyst layer that are suitable for diffusion of a reactive gas and discharge of produced water.

Therefore, conventionally, as a porous carbon material having a relatively large specific surface area and mesopore volume, and at the same time having a dendritic structure with sterically well-developed branches, Vulcan XC-72 produced by Cabot Corporation, EC 600 JD produced by Lion Corporation, and EC 300 produced by Lion Corporation have been used, for example. In addition, development of a porous carbon material having a more suitable specific surface area and mesopore volume, and also having a more suitable dendritic structure as a carbon material for a catalyst carrier has been attempted. As a porous carbon material that has been attracting particular attention in recent years, there is a dendritic carbon nanostructure that is produced from a metal acetylide, such as silver acetylide, having a three-dimensionally branched three-dimensional dendritic structure as an intermediate, and that maintains the three-dimensional dendritic structure. For a dendritic carbon nanostructure maintaining the three-dimensional dendritic structure, several proposals have been made so far.

For example, Patent Document 1 proposes a carbon material for a catalyst carrier that can be used when preparing a catalyst for a polymer electrolyte fuel cell exhibiting a low rate of decay in current amount over a long period, and excellent durability. Specifically, a porous carbon material prepared by a production method including the following steps has been proposed.

The method includes:
a step of preparing a solution containing a metal or a metal salt;
a step of blowing an acetylene gas into the solution to form a dendritic carbon nanostructure includinga metal acetylide;
a step of heating the carbon nanostructure at from 60 to 80°C to form a metal-encapsulated dendritic carbon nanostructure in which a metal is encapsulated in the dendritic carbon nanostructure;
a step of heating the metal-encapsulated dendritic carbon nanostructure to from 160 to 200°C to eject the metal such that a dendritic mesoporous carbon structure is formed; and
a step of heating the mesoporous carbon structure to from 1600 to 2200°C in a reduced pressure atmosphere or in an inert gas atmosphere. The porous carbon material has a pore diameter of from 1 to 20 nm, and a cumulative pore volume of from 0.2 to 1.5 cc/g, which are obtained from a nitrogen adsorption isotherm analyzed by the Dollimore-Heal method, as well as a BET specific surface area of from 200 to 1300 m²/g.

Patent Document 2 proposes a carrier carbon material capable of preparing a catalyst for a polymer electrolyte fuel cell that is able to exhibit high battery performance underhighly humid conditions. Specifically, a porous carbon material prepared by a production method including the following steps is proposed.

The method includes:
an acetylide production step of forming a metal acetylide by blowing an acetylene gas into an aqueous ammonia solution containing a metal or a metal salt;
a first heat treatment step of heating the metal acetylide at from 60 to 80°C to form a metal particle-encapsulated intermediate;
a second heat treatment step of heating the metal particle-encapsulated intermediate at from 120 to 200°C to make the metal particle-encapsulated intermediate eject the metal particles, thereby yielding a carbon material intermediate;
a washing treatment step of cleaning the carbon material intermediate by bringing the carbon material intermediate into contact with hot concentrated sulfuric acid; and
a third heat treatment step of heat-treating the cleaned carbon material intermediate at from 1000 to 2100°C to yield a carrier carbon material. The porous carbon material has a predetermined hydrogen content, a BET specific surface area of from 600 to 1500 m²/g, and a relative intensity ratio I_{D}/I_{G}, of the peak intensity I_{D} of a D-band in a range of from 1200 to 1400 cm⁻¹ to the peak intensity I_{G} of a G-band in a range of from 1500 to 1700 cm⁻¹, obtained in a Raman spectrum, of from 1.0 to 2.0.

Patent Document 3 proposes a carbon material for a catalyst carrier that can be used when preparing a catalyst for a polymer electrolyte fuel cell capable of exhibiting excellent durability with respect to fluctuations in potential, while maintaining high power generation performance. Specifically, a porous carbon material prepared by a production method including the following steps is proposed.

The method includes:
an acetylide production step of forming a metal acetylide by blowing an acetylene gas into an aqueous ammonia solution containing a metal or a metal salt;
a first heat treatment step of heating the metal acetylide at from 40 to 80°C to form a metal particle-encapsulated intermediate;
a second heat treatment step of heating a compact formed by compressing the metal particle-encapsulated intermediate at a rate of temperature increase of 100°C per minute or higher to 400°C or higher to make the metal particle-encapsulated intermediate eject the metal particles, thereby yielding a carbon material intermediate;
a washing treatment step of cleaning the carbon material intermediate by bringing the carbon material intermediate into contact with hot concentrated nitric acid or hot concentrated sulfuric acid; and
a third heat treatment step of heat-treating the cleaned carbon material intermediate at from 1400 to 2100°C in a vacuum or in an inert gas atmosphere to yield a carrier carbon material. The porous carbon material has the following characteristics.

The specific surface area S_{A} of mesopores having a pore diameter of from 2 to 50 nm, which is obtained by analyzing a nitrogen adsorption isotherm of the adsorption process according to the Dollimore-Heal method, is from 600 to 1600 m²/g;
the relative intensity ratio I_{G'}/I_{G} of the peak intensity I_{G'} of a G'-band in a range of from 2650 to 2700 cm⁻¹ to the peak intensity I_{G} of a G-band in a range of from 1550 to 1650 cm⁻¹, in a Raman spectrum, is from 0.8 to 2.2;
the specific pore surface area S₂₋₁₀ of a portion of mesopores having a pore diameter of from 2 nm to less than 10 nm is from 400 to 1100 m²/g, and the specific pore volume V₂₋₁₀ is from 0.4 to 1.6 cc/g;
the specific pore surface area S₁₀₋₅₀ of a portion of mesopores having a pore diameter of from 10 nm to 50 nm is from 20 to 150 m²/g, and the specific pore volume V₂₋₁₀ is from 0.4 to 1.6 cc/g; and
the specific pore surface area S₂ of pores having a pore diameter lower than 2 nm, which is determined by analyzing the nitrogen adsorption isotherm of the adsorption process by the Horvath-Kawazoe method, is from 250 to 550 m²/g.

Patent Document 4 proposes a carbon material for a catalyst carrier that can be used when preparing a catalyst for a polymer electrolyte fuel cell that has superior durability with respect to repetitive load fluctuations such as start and stop, and superior power generation performance under low humidity operating conditions. Specifically, a carbon material for a catalyst carrier is proposed that is obtained by using, as a raw material, a porous carbon material having a dendritic carbon nanostructure (ESCARBON (registered tradename) -MCND produced by Nippon Steel Sumikin Kagaku Co., Ltd.) prepared via a self-decomposing and explosive reaction using a metal acetylide as an intermediate, by performing a graphitization treatment, and then by additionally performing an oxidation treatment using hydrogen peroxide and nitric acid with an in-liquid plasma device or the like. The carbon material for a catalyst carrier has the following characteristics.

The oxygen content O_{ICP} is from 0.1 to 3.0% by mass,
the residual oxygen content O_{1200°C} remaining after a heat treatment at 1200°C in an inert gas atmosphere (or in a vacuum) is from 0.1 to 1.5% by mass,
the BET specific surface area is from 300 to 1500 m²/g,
the half-value width ΔG of the G band detected in a range of from 1550 to 1650 cm⁻¹ of a Raman spectrum is from 30 to 70 cm⁻¹, and
the residual hydrogen content H_{1200°C} remaining after a heat treatment at 1200°C in an inert gas atmosphere (or in a vacuum) is from 0.005 to 0.080% by mass.

### Citation List

### Patent Document

Patent Document 1: WO 2014/129597 A1
Patent Document 2: WO 2015/088025 A1
Patent Document 3: WO 2015/141810 A1
Patent Document 4: WO 2016/133132 A1

### SUMMARY OF INVENTION

### Technical Problem

Any of the carbon materials for a catalyst carrier described in the Patent Document 1 to 4 surely exhibit respectively predefined power generation characteristics when a catalyst for the polymer electrolyte fuel cell is prepared. However, the inventors of the present invention have examined the power generation characteristics in detail, to find that there is still room for improvement in increasing the output voltage at the time of high current (high current (heavy-load) characteristics important in taking out high power, especially when used as a fuel cell for an automobile) while maintaining the durability. In order to increase the output voltage at the time of high current, as described above, relatively large specific surface area and mesopore volume are important for the catalyst carrier to support platinum as a catalyst metal in a sufficient volume and in a highly dispersed state. In addition, when a catalyst layer is formed, it is important that micropores to be formed in the catalyst layer are in a more appropriate state from the viewpoint of diffusion of a reactive gas and discharge of generated water.

Then, the inventors firstly investigated in detail which of the diffusion in micropores of a catalyst layer, or the diffusion in carrier pores inside a catalyst carrier had a stronger impact on the diffusion of oxygen and water vapor. Specifically, regarding the overvoltage which greatly affects the power generation characteristics of a polymer electrolyte fuel cell, it has been generally believed that the overvoltage at the time of high current depends mainly on the diffusion of oxygen supplied to the catalyst layer, and the diffusion of product water (water vapor) discharged from the catalyst layer. Therefore, such diffusion of oxygen and water vapor, which affects mainly the overvoltage at high current, was investigated. Considering the diffusion mechanism which is presumably working inside the micropores and pores in the carrier, the inventors arrived at a conclusive idea that the rate determining step might be roughly conjectured from the ratio of the diffusion length to the pore diameter (diffusion length/pore diameter). Based on the idea the inventors have thought that the rate-determining step for diffusion of oxygen and water vapor in the catalyst layer is not in the diffusion in the carrier pores inside the catalyst carrier, but in the diffusion in the catalyst layer micropores.

Then, the inventors have deepened the investigations with respect to increase in the output voltage at high current. Specifically, studies have been made for improvement of high current (heavy-load) characteristics by optimizing micropores in the catalyst layer, which constitute the rate-determining factor for diffusion of oxygen and water vapor, so as to improve diffusion of oxygen and water vapor in the catalyst layer without deteriorating the power generation characteristics other than the high current characteristics and the durability required for the catalyst layer. As a result, the inventors have arrived at a conclusive idea that the high current (heavy-load) characteristics can be probably improved, if the three-dimensional dendritic structure of a dendritic carbon nanostructure proposed by the Patent Document 1 to 4 is further optimized (especially, by controlling the structure such that the branch diameter of the three-dimensional dendritic structure formed at the time of production of the dendritic carbon nanostructure becomes smaller), because micropores having an appropriate size are formed in a catalyst layer in forming the catalyst layer.

The inventors found first a physical property of a porous carbon material, which correlated well with the high current (heavy-load) characteristics. Then studies have been made to devise an optimum structure based on the physical property value of a porous carbon material. Next, a synthesis method of the devised porous carbon material has been investigated.

In the first investigation, a typical method of DBP oil absorption number, known as an industrial index representing a conventional carbon black aggregate structure (nomenclature comparative to dendritic structure) was tried. Although the DBP oil absorption method is somewhat effective for comparing materials having almost the same pore structures as in the comparison between dendritic carbon nanostructures, in a case where the comparative study is extended to include various porous carbon materials having different pore structures, such as Ketjen black, activated carbon, and dendritic carbon nanostructure, the difference may not be responded by the method properly, even when the dendritic structure or the pore volume are different between the materials. That is, it has become clear that the typical DBP oil absorption number method is not suitable for comparison of such materials. Meanwhile, as another typical method of evaluating the porosity of a gas electrode, a method of measuring gas permeability is also known. Although this method is favorably applicable to a substance in a film form, it may not be applied to a substance in a powder form. However, it is difficult to form various porous carbon materials into a film form suitable for measurement. Namely, it has become clear that the method is not suitable, too.

In recent years, in a mercury porosimetry method (mercury intrusion method), application of the maximum pressure of about 400 MPa is now possible, and theoretically it becomes possible to evaluate pores as small as 3 nm. Paying attention to this fact, a physical property of a porous carbon material, which correlates well with the high current (heavy-load) characteristics, has been further investigated. As a result of intensive investigations on the application of the mercury porosimetry method, although it was said that the same was not very suitable for measuring a powder, it has been found that a measurement which reflects accurately the structure of the material with excellent reproducibility may be obtained, when a powder is lightly compressed to an aggregated form. Furthermore, the relationship between the mercury absorption amount V_{Hg} and the mercury pressure P_{Hg} has been investigated using this method, and as a result it has been found that an increment ΔV_{Hg:4.3-4.8} of the mercury absorption amount V_{Hg} measured in a case where the common logarithm Log P_{Hg} of the mercury pressure P_{Hg} is increased from 4.3 to 4.8 is suitable as an index reflecting the high current characteristics, and with which the optimized three-dimensional dendritic structure of a dendritic carbon nanostructure may be rated quantitatively.

A method of synthesizing a porous carbon material having the envisaged structure by applying the mercury porosimetry has been investigated as follows.

The methods for producing a carbon material for a catalyst carrier proposed in the above Patent Document 1 to 4 have been studied in detail. In an acetylide producing step of synthesizing a silver acetylide, an acetylene gas is blown into the reaction solution including an ammoniac aqueous solution of silver nitrate to synthesize silver acetylide. In blowing the acetylene gas, the concentration of silver nitrate in a reaction solution at the time of preparation of the reaction solution is adjusted to about 5% by mass, and the reaction is carried out with the temperature of the reaction solution at room temperature (25°C) or less. Meanwhile, the inventors have thought regarding the acetylide producing step as follows. By making the concentration of silver nitrate at the time of preparing the reaction solution higher than the conventional method, and making the reaction temperature equal to or higher than the conventional reaction temperature, the reactivity between silver nitrate in the reaction solution and acetylene blown into the reaction solution is enhanced (or reactive points are increased). By this means, silver acetylide with a three-dimensional dendritic structure having a uniformly increased branch number, and thinner branch diameters may be produced. In a dendritic carbon nanostructure prepared using such silver acetylide, the branch number, and the branch diameters of the silver acetylide may be maintained intact. Further, when a catalyst layer is formed using the dendritic carbon nanostructure with a three-dimensional dendritic structure having the increased branch number and thinner branch diameters, micropores to be formed in the formed catalyst layer are optimized to improve the high current (heavy-load) characteristics.

Based on such an idea, in synthesizing silver acetylide in the acetylide producing step, the concentration of silver nitrate in the reaction solution was increased significantly, and the reaction temperature was set higher than the conventional temperature of room temperature (25°C) to form silver acetylide with a three-dimensional dendritic structure. Then using the formed silver acetylide, a dendritic carbon nanostructure was prepared by implementing the first heat treatment step, the second heat treatment step, the washing treatment step, and the third heat treatment step as applied in the prior art. Using the prepared dendritic carbon nanostructure as a catalyst carrier, a catalyst, and a catalyst layer were prepared in the same manner as in the prior art, as well as an MEA was produced, and the battery performance was examined. As a result, it has been found that when a dendritic carbon nanostructure is prepared using silver acetylide prepared as above, and the dendritic carbon nanostructure is utilized as a catalyst carrier, the high current (heavy-load) characteristics of a polymer electrolyte fuel cell may be improved significantly.

The present disclosure was created based on the respective findings above, and an object thereof is to provide a carbon material for a catalyst carrier that is suitable for producing a catalyst of a polymer electrolyte fuel cell having superior high current (heavy-load) characteristics (output voltage at high current) while maintaining durability.

Another object of the present disclosure is to provide a method of producing a carbon material for a catalyst carrier, which is useful for producing a catalyst of this kind of polymer electrolyte fuel cell.

### Solution to Problem

That is, the carbon material for a catalyst carrier of the present disclosure includes the following embodiments.
[1] A carbon material for a catalyst carrier of a polymer electrolyte fuel cell, which is a porous carbon material with a three-dimensionally branched three-dimensional dendritic structure, having a branch diameter of 81 nm or less, and simultaneously satisfing the following (A) and (B) :
   (A) a BET specific surface area S_{BET} obtained by a BET analysis of a nitrogen gas adsorption isotherm is from 400 to 1500 m²/g; and
   (B) with respect to the relationship between a mercury pressure P_{Hg} and a mercury absorption amount V_{Hg} measured by mercury porosimetry, an increment ΔV_{Hg:4}._{3-4.8} of the measured mercury absorption amount V_{Hg} is from 0.82 to 1.50 cc/g in a case in which a common logarithm Log P_{Hg} of the mercury pressure P_{Hg} has increased from 4.3 to 4.8.
[2] The carbon material for a catalyst carrier of a polymer electrolyte fuel cell according to [1] above, wherein a nitrogen gas adsorption amount V_{N:0.4-0.8} adsorbed between a relative pressure p/p₀ from 0.4 to 0.8 in the nitrogen gas adsorption isotherm is from 100 to 300 cc(STP)/g.
[3] The carbon material for a catalyst carrier of a polymer electrolyte fuel cell according to [1] or [2] above, wherein a full width at half maximum ΔG of a G-band peak detected in the vicinity of 1580 cm⁻¹ of a Raman spectrum is from 50 to 70 cm⁻¹.
[4] The carbon material for a catalyst carrier of a polymer electrolyte fuel cell according to any one of [1] to [3] above, wherein the increment ΔV_{Hg:4.3-4.8} of the mercury absorption amount V_{Hg} is from 0.85 to 1.40 cc/g in a case in which the common logarithm Log P_{Hg} of the mercury pressure P_{Hg} is increased from 4.3 to 4.8,.
[5] A method of producing a carbon material for a catalyst carrier of a polymer electrolyte fuel, the method including:
   producing an acetylide by blowing an acetylene gas into a reaction solution including an aqueous ammonia solution of silver nitrate, to synthesize silver acetylide,
   a first heat treatment of heat-treating the silver acetylide at a temperature of from 40 to 80°C to prepare a silver particle-encapsulated intermediate,
   a second heat treatment of causing a self-decomposing and explosive reaction of the silver particle-encapsulated intermediate at a temperature of from 120 to 400°C to yield a carbon material intermediate,
   a washing treatment of bringing the carbon material intermediate into contact with an acid to clean the carbon material intermediate, and
   a third heat treatment of heat-treating the cleaned carbon material intermediate in a vacuum, or an inert gas atmosphere, at a temperature of from 1400 to 2300°C to yield a carbon material for a catalyst carrier;
   wherein, in producing the acetylide , the concentration of silver nitrate in the reaction solution is adjusted to from 10 to 28% by mass at the time of preparing the reaction solution,, and a temperature of the reaction solution is raised to from 25 to 50°C
[6] The method of producing a carbon material for a catalyst carrier of a polymer electrolyte fuel cell according to [5], wherein, in the acetylide ,the acetylene gas is blown into the reaction solution from a plurality of blow-in ports.
[7] The method of producing a carbon material for a catalyst carrier of a polymer electrolyte fuel cell according to [6] above, wherein the acetylene gas is blown into the reaction solution from two to four blow-in ports.
[8] The method of producing a carbon material for a catalyst carrier of a polymer electrolyte fuel cell according to [6] or [7] above, wherein the plural blow-in ports for blowing the acetylene gas into the reaction solution are arranged along a liquid surface rim of the reaction solution at regular intervals.

### Advantageous Effects of Invention

With the carbon material for a catalyst carrier of the present disclosure, a catalyst carrier suitable for producing a catalyst of a polymer electrolyte fuel cell having improved high current (heavy-load) characteristics in terms of exhibiting a high output voltage at a high current, while maintaining durability, may be provided.

Further, by a production method of the present disclosure, a carbon material for a catalyst carrier suitable for producing a catalyst of a polymer electrolyte fuel cell having improved high current (heavy-load) characteristics in terms of exhibiting a high output voltage at a high current, while maintaining durability, may be produced.

### BRIEF DESCRIPTION OF THE DRAWINGS

[Figure 1] Figure 1 is a graph showing the relationship between the mercury pressure P_{Hg} and the mercury absorption amount V_{Hg} of carbon materials for a catalyst carrier of Experimental Example 21, and Experimental Examples 25, 27, 30, and 31 of the present disclosure measured by mercury porosimetry.
[Figure 2] Figure 2 is a photograph showing the measurement method of measuring a branch diameter, when a carbon material for a catalyst carrier of the present disclosure was observed with SEM.
[Figure 3] Figure 3 is an explanatory diagram showing a method of measuring a branch diameter of a carbon material for a catalyst carrier of the present disclosure.
[Figure 4] Figure 4 is a schematic view showing an example of a device for blowing an acetylene gas into a reaction solution in an acetylide producing step of the present disclosure.

### DESCRIPTION OF EMBODIMENTS

An example of a preferred Embodiment with respect to a carbon material for a catalyst carrier of a polymer electrolyte fuel cell of the present disclosure and a producing method therefor will be described in detail below.

A carbon material for a catalyst carrier of a polymer electrolyte fuel cell of the present disclosure is a porous carbon material with a three-dimensionally branched three-dimensional dendritic structure, which has a branch diameter of 81 nm or less, and satisfies the following (A) and (B) at the same time:
(A) a BET specific surface area S_{BET} obtained by a BET analysis of a nitrogen gas adsorption isotherm is from 400 to 1500 m²/g; and
(B) with respect to the relationship between a mercury pressure P_{Hg} and a mercury absorption amount V_{Hg} measured by mercury porosimetry, an increment ΔV_{Hg:4.3-4.8} of the mercury absorption amount V_{Hg} measured, in a case where the common logarithm Log P_{Hg} of the mercury pressure P_{Hg} is increased from 4.3 to 4.8, is from 0.82 to 1.50 cc/g.

In this regard, the unit of a mercury absorption amount V_{Hg} is herein cc/g, and the unit of a mercury pressure P_{Hg} is kPa. Further, the unit of a nitrogen gas adsorption amount is cc(STP)/g, the unit of a BET specific surface area S_{BET} is m²/g, the unit of a branch diameter is nm, and the unit of the full width at half maximum of a G-band peak is cm⁻¹.

A carbon material for a catalyst carrier of the present disclosure may be a porous carbon material with a three-dimensionally branched three-dimensional dendritic structure. A porous carbon material with a three-dimensionally branched three-dimensional dendritic structure is preferably including a dendritic carbon nanostructure. Specifically, the dendritic carbon nanostructure is yielded from a silver acetylide having a three-dimensional dendritic structure as an intermediate. With respect to the carbon material for a catalyst carrier, the BET specific surface area S_{BET} is from 400 m²/g to 1,500 m²/g, and preferably from 500 m²/g to 1,400 m²/g. When the BET specific surface area S_{BET} is less than 400 m²/g, there is a risk that it becomes difficult to support catalyst metal fine particles at a high density in the pores. Meanwhile, when it is allowed to exceed 1,500 m²/g, the durability tends to be lowered as the crystallinity decreases substantially.

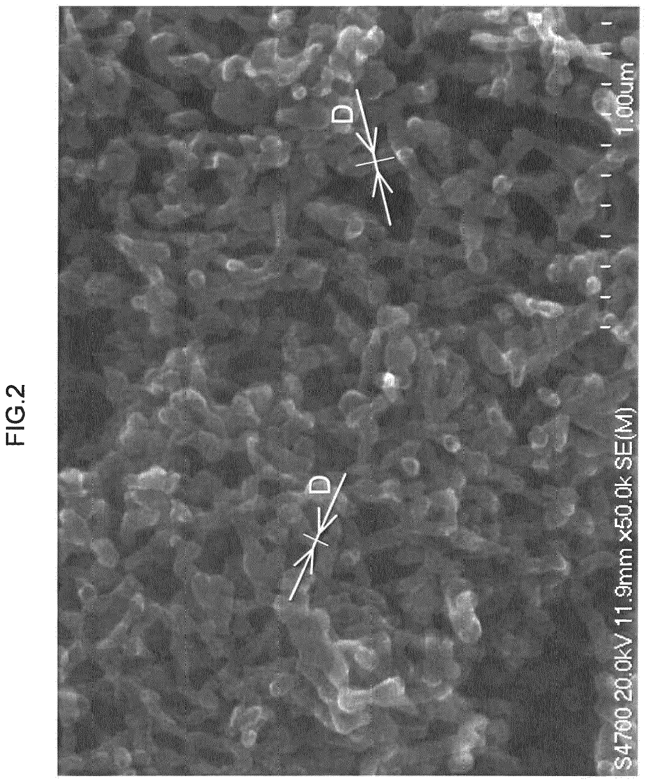

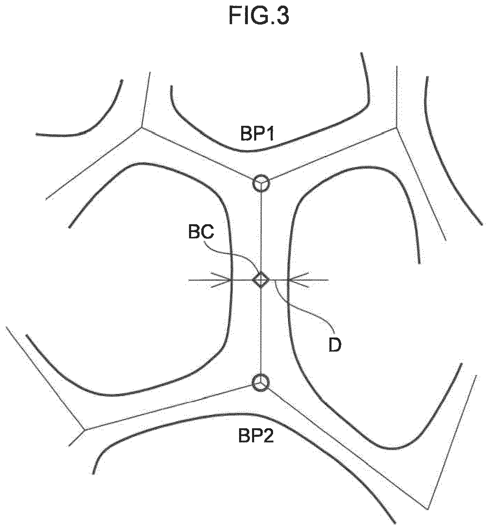

In this regard, a dendritic carbon nanostructure is a dendritic carbon structure having a branch diameter of 10 nm or more and several 100s nanometers or less (for example, 500 nm or less, and preferably 200 nm or less). The branch diameter is measured as in Examples described below using a scanning electron microscope (SEM; SU-9000 manufactured by Hitachi High-Technologies Corporation), and SEM images at 5 visual fields (size 2.5 µm × 2 µm) were observed at 100000-fold magnification. Branch diameters were measured at 20 positions in each visual field, and the mean value of total 100 measurements is regarded as the branch diameter. The branch diameter is determined as the thickness of a branch of interest measured at the center between the adjacent two branch points (the middle part of the branched branch) (refer to Figure 2, D in Figure 2 stands for a branch diameter at one position). Referring to Figure 3, the method of measuring a branch diameter will be described. In Figure 3, one branch of interest is shown. For this branch of interest, the branch point BP 1 and the branch point BP 2 are specified. Next the specified branch point BP 1 and branch point BP 2 are connected with a line segment, and the thickness (width) of the branch is measured on the perpendicular bisector BC of the line segment connecting the branch point BP 1 and the branch point BP 2. The measured thickness of the branch is a branch diameter D at one position.

For a carbon material for a catalyst carrier of the present disclosure, with respect to the relationship between a mercury pressure P_{Hg} and a mercury absorption amount V_{Hg} measured by mercury porosimetry, an increment ΔV_{Hg:4.3-4.8} of the mercury absorption amount V_{Hg} measured, in a case where the common logarithm Log P_{Hg} of the mercury pressure P_{Hg} is increased from 4.3 to 4.8, is from 0.82 to 1.50 cc/g, and preferably from 0.85 cc/g to 1.40 cc/g. When the increment ΔV_{Hg:4.3-4.8} of the mercury absorption amount V_{Hg} is less than 0.82 cc/g, it becomes difficult to improve the high current (heavy-load) characteristics. When it exceeds 1.50 cc/g, there arises a risk that a dendritic structure developed in a step of applying a shear force for improving the dispersibility during production of a catalyst ink, or in a thermocompression bonding step of bonding a catalyst layer to a proton conductive membrane, may be destructed mechanically, and micropores in a catalyst layer may collapse.

From the viewpoint of the gas diffusibility inside micropores to be formed in the catalyst layer, a carbon material for a catalyst carrier of the present disclosure preferably exhibit a nitrogen gas adsorption amount V_{N:0.4-0.8} adsorbed between the relative pressure p/po of from 0.4 to 0.8 in the nitrogen gas adsorption isotherm from 100 cc(STP)/g to 300 cc(STP)/g, and more preferably from 120 cc(STP)/g to 250 cc(STP)/g. Furthermore, from the viewpoint of improving the crystallinity to improve the durability, the full width at half maximum ΔG of a G-band peak detected at 1580 cm⁻¹ of a Raman spectrum is preferably from 50 cm⁻¹ to 70 cm⁻¹, and more preferably from 50 cm⁻¹ to 65 cm⁻¹. When the nitrogen gas adsorption amount V_{N:0.4-0.8} is less than 100 cc(STP)/g, the pore volume of meso-size pores supporting catalyst metal fine particles becomes small, and there arises a risk that the gas diffusibility in micropores formed in a catalyst layer also decreases to increase the reaction resistance. On the contrary, when it exceeds 300 cc(STP)/g, the carbon wall forming the pores becomes too thin, and the mechanical strength of the material may be impaired to cause material destruction at an electrode producing step. When the full width at half maximum ΔG of the G-band peak is less than 50 cm⁻¹, the crystallinity becomes excessively high to reduce the ruggedness of the pore walls, and the adsorbability of the catalyst metal fine particles to the pore wall may decrease. On the contrary, when it exceeds 70 cm⁻¹, the crystallinity is too low, and the durability may decrease.

In the case where a carbon material for a catalyst carrier of the present disclosure is a dendritic carbon nanostructure, silver acetylide, which is a production intermediate, has a branch diameter of 81 nm or less, as measured using a scanning electron microscope (SEM). The branch diameter is preferably from 59 nm to 81 nm, and more preferably from 63 nm to 73 nm. As to the branch diameter of the silver acetylide, it is preferable that the diameter is relatively thin insofar as the BET specific surface area S_{BET} and the increment ΔV_{Hg:4.3-4.8} of the mercury absorption amount V_{Hg} are not impaired. However, when the branch diameter is less than 59 nm, improvement of the high current (heavy-load) characteristics may not be attained in some cases. Also, when the branch diameter becomes so thick to exceed 81 nm, the aimed improvement of the high current (heavy-load) characteristics becomes hardly attainable.

With respect to the method of producing a carbon material for a catalyst carrier of the present disclosure, unlike the conventional method, it is important to prepare a silver acetylide with a three-dimensional dendritic structure having a relatively small branch diameter and a uniformly increased number of branches. In order to synthesize such a silver acetylide, the concentration of silver nitrate in a reaction solution including an ammoniac aqueous solution of silver nitrate at the time of preparing the reaction solution in the acetylide producing step is adjusted to from 10% by mass to 28% by mass, (preferably from 15% by mass to 25% by mass). In addition, the temperature of the reaction solution is raised to from 25°C to 50°C (preferably from 35°C to 47°C). When the concentration of silver nitrate in the reaction solution at the time of preparation of the reaction solution is less than 10% by mass, the branch diameter of the silver acetylide to be prepared is not sufficiently reduced. On the contrary, when it exceeds 28% by mass, not only it becomes difficult to improve the high current (heavy-load) characteristics, but also the BET specific surface area may decrease rapidly. When the temperature of the reaction solution exceeds 50°C, the branch diameter becomes excessively thin and there arises a risk that the high current (heavy-load) characteristics may not be improved.

Furthermore, in the above acetylide producing step, in order to react acetylene blown into the reaction solution with silver nitrate in the reaction solution as uniformly as possible, it is preferable to blow an acetylene gas into the reaction solution through a plurality of blow-in ports (more preferably through 2 to 4 blow-in ports). Further, it is preferable that these plural blow-in ports are arranged at regular intervals along the surface rim of the reaction solution. When an acetylene gas is blown into the reaction solution in this manner through a plurality of blow-in ports, and especially in a case where the plural blow-in ports are located at regular intervals from each other along the surface rim of the reaction solution, preparation of a silver acetylide with a three-dimensional dendritic structure having a relatively small branch diameter and a uniformly increased number of branches becomes surer.

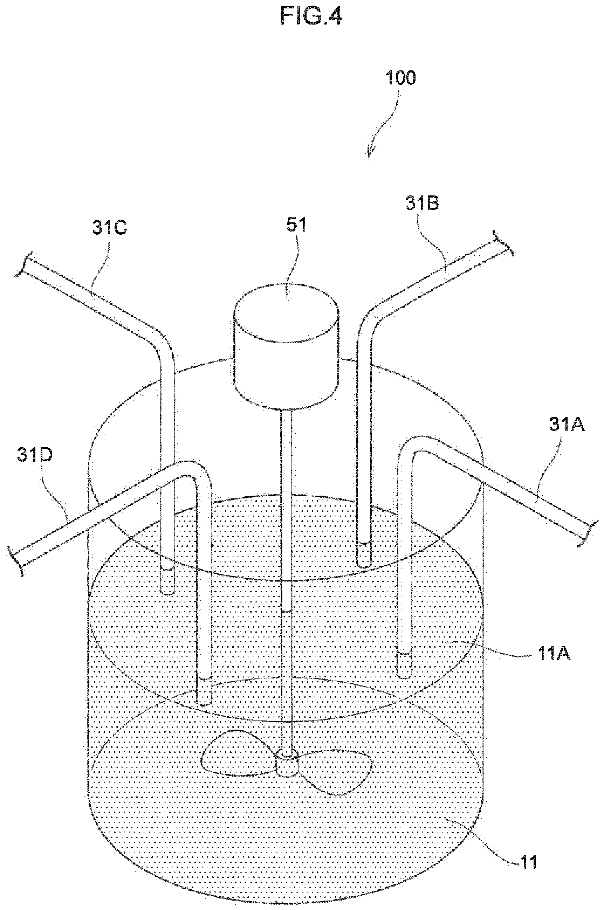

A method of blowing an acetylene gas into the reaction solution will be described referring to Figure 4. Figure 4 is a schematic view showing an example of a device for blowing an acetylene gas into a reaction solution in an acetylide producing step. A reaction vessel 100 shown in Figure 4 is provided with an agitator 51 and blow-in ports 31A, 31B, 31C, and 31D for blowing in an acetylene gas into the reaction solution 11 contained in the reaction vessel 100. The reaction vessel 100 shown in Figure 4 contains the reaction solution 11. The reaction solution 11 is a silver nitrate-containing ammoniac aqueous solution prepared by containing silver nitrate and an ammoniac aqueous solution. The tips of the blow-in ports 31A to 31D are respectively positioned below the surface 11A of the reaction solution 11, and along the rim of the surface 11 A of the reaction solution 11. The blow-in ports 31A to 31D are arranged at regular intervals from each other. The blow-in ports 31A to 31D have a structure in which an acetylene gas can be blown into the reaction solution 11 from the tips of the blow-in ports 31A to 31D. In the reaction container 100, an acetylene gas is blown into the reaction solution 11 through the blow-in ports 31A to 31D, while the reaction solution 11 contained in the reaction container 100 is stirred with the agitator 51. By blowing an acetylene gas through the blow-in ports 31A to 31D, a silver acetylide with a three-dimensional dendritic structure having a small branch diameter and a uniformly increased number of branches is prepared in the reaction solution 11.

In the above, referring to Figure 4, a method of blowing an acetylene gas using four blow-in ports has been described, but the number of blow-in ports is not limited to four. Insofar as a carbon material for a catalyst carrier of the present disclosure can be obtained, the number of blow-in ports may be one, or three. Alternatively, the number of the blow-in ports may be five or more. Further, an acetylene gas may be blown through at least one blow-in port among a plurality of blow-in ports (for example, four blowing ports as shown in Figure 4).

The ammonia concentration of an ammoniac aqueous solution composing the reaction solution during preparation of a reaction solution in the above-described acetylide producing step is conceivably correlated with the reaction rate for forming silver acetylide. In other words, it is conceivable that an ammonium ion having good affinity to a nitrate anion dissociates a silver ion from a nitrate anion in a process of forming silver acetylide, so that the reaction rate for forming silver acetylide is enhanced. Therefore, the ammonia concentration of the ammoniac aqueous solution may be adjusted appropriately corresponding to a concentration of silver nitrate, without any particular limitation. For example, the ammonia concentration of the ammoniac aqueous solution is preferably not less than half, but not more than 5 times as much as the silver nitrate concentration (% by mass) in the reaction solution, and usually not more than 20% by mass (preferably not more than 15% by mass, and more preferably not more than approx. 10% by mass).

A silver acetylide prepared as above is used as a production intermediate. After yielding a production intermediate, a carbon material for a catalyst carrier of the present disclosure, which is a porous carbon material with a three-dimensionally branched three-dimensional dendritic structure (specifically, carbon material for a catalyst carrier including dendritic carbon nanostructures), may be prepared through a method similar to the conventional method.

That is, a carbon material for a catalyst carrier of the present disclosure may be obtained by a producing method having the following steps.
A (first heat treatment step) where the silver acetylide is heat-treated at a temperature of from 40 to 80°C (preferably from 60 to 80°C) to prepare a silver particle-encapsulated intermediate;
a (second heat treatment step) where the prepared silver particle-encapsulated intermediate is heat-treated at a temperature of from 120 to 400°C (preferably from 160 to 200°C) to eject the silver particles to prepare a carbon material intermediate containing the silver particles; and subsequently;
a (washing treatment step) where the prepared carbon material intermediate containing the silver particles is brought into contact with an acid, such as nitric acid, or sulfuric acid, to clean the same by removing the silver particles and the like in the carbon material intermediate; and
a (third heat treatment step) where the cleaned carbon material Intermediate is heat-treated in a vacuum or an inert gas atmosphere at from 1400 to 2300°C (preferably from 1500 to 2300°C).

A carbon material for a catalyst carrier of the present disclosure has a three-dimensionally branched three-dimensional dendritic structure suitable for a catalyst carrier, and is preferably a porous carbon material incliging a dendritic carbon nanostructure. This material is equivalent, or superior to conventional similar dendritic carbon nanostructures in terms of BET specific surface area, and durability. Furthermore, since with respect to a carbon material for a catalyst carrier of the present disclosure, the branch diameter of the three-dimensional dendritic structure is smaller, a reactive gas can diffuse without resistance in a catalyst layer prepared using the carbon material as a catalyst carrier. Also, micropores suitable for discharging the water generated in the catalyst layer (generated water) without delay are formed. Therefore, the carbon material for a catalyst carrier of the present disclosure is capable of improving remarkably the high current (heavy-load) characteristics in a polymer electrolyte fuel cell (significant increase in the output voltage at high current).

### Examples

A carbon material for a catalyst carrier of the present disclosure and the production method therefor will be specifically described below based on Experimental Examples.

The measurements of the BET specific surface area S_{BET}, increment ΔV_{Hg:4.3-4.8} of the mercury absorption amount by mercury porosimetry, nitrogen gas adsorption amount V_{N:0.4-0.8}, and full width at half maximum ΔG of a G-band peak at 1580 cm⁻¹ of a Raman spectrum, and a branch diameter of carbon materials for a catalyst carrier prepared in the following Experimental Examples were respectively conducted as follows.

### [Measurement of BET Specific Surface Area, and Nitrogen Gas Adsorption amount V_{N:0.4-0.8}]

Approximately 30 mg of the carbon material for a catalyst carrier produced or prepared in each of the Experimental Examples was weighed out and dried in a vacuum at 120°C for 2 hours. Thereafter, nitrogen gas adsorption isotherm was measured using an automatic specific surface area measuring device (BELSORP-MAX, manufactured by MicrotracBEL Corp.) using a nitrogen gas as an adsorbate. The BET specific surface area was calculated by carrying out the BET analysis in the p/p₀ range of from 0.05 to 0.15 of the adsorption isotherm.

Also, the difference between the adsorption amount when the p/p₀ of the adsorption isotherm was 0.8, and the adsorption amount when the p/p₀ was 0.4 was calculated, and used as the value of V_{N:0.4A-0.8}.

### [Measurement of Increment ΔV_{Hg:4.3-4.8} of Mercury Bbsorption amount in Mercury Porosimetry]

From 50 to 100 mg of the carbon material for a catalyst carrier produced or prepared in each of the Experimental Examples was weighed out and compressed lightly to form an aggregate as a sample for an analysis. The thus formed sample was placed in a sample container for a measuring device (AUTOPORE IV 9520, manufactured by Shimadzu Corporation), in which mercury was intruded under conditions of from the initial introductory pressure of 5 kPa up to the maximum intrusion pressure of 400 MPa. From the relationship between the common logarithm Log P_{Hg} of the then mercury pressure P_{Hg} and the mercury absorption amount V_{Hg}, the increment ΔV_{Hg:4.3-4.8} of the mercury absorption amount V_{Hg} was found.

### [Measurement of Full Width at Half Maximum ΔG of G-band Peak at 1580 cm⁻¹ of Raman Spectrum]

Approximately 3 mg of the carbon material for a catalyst carrier produced or prepared in each of the Experimental Examples was weighed out. The sample was mounted on a laser Raman spectrophotometer (model NRS-3100 manufactured by Jasco Corporation), and a measurement was carried out under measurement conditions: excitation laser: 532 nm, laser power: 10 mW (sample irradiation power: 1.1 mW), microscope arrangement: backscattering, slit: 100 µm × 100 µm, objective lens: 100x, spot diameter: 1 µm, exposure time: 30 sec, observation wavenumber: from 2000 to 300 cm⁻¹, and cumulative number: 6. From the obtained 6 spectra, the respective full widths at half maximum ΔG of the G-band peaks in the vicinity of 1580 cm⁻¹ were determined, and the mean value thereof was regarded as a measured value.

### [Measurement of Branch Diameter (nm)]

The sample of the carbon material for a catalyst carrier prepared in each of Experimental Examples 1 to 24 was set on a scanning electron microscope (SEM; SU-9000 manufactured by Hitachi High-Technologies Corporation). Then SEM images at 5 visual fields (size 2.5 µm × 2 µm) were observed at 100000-fold magnification, and branch diameters were measured at 20 positions on an image in each visual field, and the mean value of total 100 measurements was regarded as the branch diameter. For the branch diameter to be measured, the diameter at the center between the adjacent two branch points (the middle part of the branched branch) of a branch of interest was measured and regarded as the branch diameter. Referring to Figure 2, D in Figure 2 stands for a branch diameter to be measured.

### <<Experimental Examples 1 to 11>>

### (1) Silver Acetylide Producing Step

First, a reaction solution including an aqueous ammonia solution containing silver nitrate was prepared, in which silver nitrate was dissolved in an aqueous ammonia solution at the concentrations shown in Table 1. In this case, the ammonia concentration of the ammoniac aqueous solution was made equal to the concentration of silver nitrate until the concentration of silver nitrate of 10% by mass (ammonia concentration 10% by mass). When the concentration of silver nitrate exceeded 10% by mass, the ammonia concentration was fixed at 10% by mass. Into the reaction solution an inert gas, such as argon or nitrogen, was blown for 40 to 60 min to replace dissolved oxygen with the inert gas to eliminate the risk of explosion of the silver acetylide produced in the silver acetylide producing step.

An acetylene gas was blown into the reaction solution prepared in this way such that the reaction time was about 10 min. An acetylene gas was blown in at a reaction temperature of 25°C with stirring from one blow-in port while adjusting the blowing amount and blowing rate, and when the acetylene gas began to emit as bubbles from the reaction solution, the acetylene gas blow was discontinued. When silver nitrate and acetylene in the reaction solution were allowed to react further, a white precipitate of silver acetylide was formed.

The formed precipitate of silver acetylide was recovered by filtration through a membrane filter. The recovered precipitate was redispersed in methanol and filtrated again, and the collected precipitate was transferred into a petri dish, and impregnated with a small amount of methanol to complete silver acetylide with respect to each of Experimental Examples 1 to 11 (Experiment Symbols M1 to M11).

### (2) First Heat Treatment Step

Approximately 0.5 g of silver acetylide yielded in the above silver acetylide producing step of each Experimental Example in a state impregnated with methanol was placed in a stainless steel cylindrical container with a diameter of 5 cm as it was. This was then placed in a vacuum electric heating furnace and dried in a vacuum at 60°C for about from 15 to 30 min to prepare a silver particle-encapsulated intermediate derived from silver acetylide of each of Experimental Example.

### (3) Second Heat Treatment Step

Next, the 60°C silver particle-encapsulated intermediate obtained in the first heat treatment step immediately after the vacuum drying was directly, without taking out from the vacuum electric heating furnace, heated to a temperature of 200°C. In the course of the heating, a self-decomposing and explosive reaction of silver acetylide was induced to prepare a carbon material intermediate including a composite of silver and carbon.

In the course of this self-decomposing and explosive reaction, silver nano-sized particles (silver nanoparticles) are formed. At the same time, a carbon layer with a hexagonal layer plane is formed surrounding such a silver nanoparticle to form skeleton with a three-dimensional dendritic structure. Furthermore, the produced silver nanoparticles are made porous by explosion energy and erupted outward through pores in the carbon layer to form silver aggregates (silver particles).

### (4) Washing Treatment Step

The carbon material intermediate including the composite of silver and carbon obtained in the second heat treatment step was subjected to a washing treatment with a 60% by mass concentrated nitric acid. By this washing treatment, silver particles and unstable carbon compounds present on the surface of the carbon material intermediate were cleaned off.

### (5) Third Heat Treatment Step

The carbon material intermediate cleaned in the washing treatment step was heat-treated in an inert gas atmosphere at the heating temperature set forth in Table 1 for 2 hours to yield a carbon material for a catalyst carrier of each of Experimental Examples. The heat treatment temperature in the third heat treatment step is a temperature heretofore generally adopted for the control of crystallinity. By this heat treatment, a change in the physical property and an influence on the battery characteristics of the carbon material derived from the silver acetylide of each Experimental Example were examined.

With respect to the carbon material for a catalyst carrier prepared as above in each of Experimental Examples 1 to 11, the BET specific surface area S_{BET}, the increment ΔV_{Hg:4.3-4.8} of the mercury absorption amount in the mercury porosimetry, the nitrogen gas adsorption amount V_{N:0.4-0.8}, the full width at half maximum ΔG of the G-band peak at 1580 cm⁻¹ of a Raman spectrum, and the branch diameter were measured.

The results are shown in Table 2.

### <<Experimental Examples 12 to 17>>

As shown in Table 1, the concentration of the silver nitrate was changed to 20% by mass, the reaction temperature was changed in the range of from 25 to 50°C , and the number of blow-in ports in blowing an acetylene gas was set at 2 or 4 in the above acetylide producing step for synthesizing silver acetylide. Except the above, the acetylide producing step, the first heat treatment step, the second heat treatment step, the washing treatment step, and the third heat treatment step were carried out in the same manner as in Experimental Examples 1 to 11 to prepare the respective carbon materials for a catalyst carrier of Experimental Examples 12 to 17 (Experiment Symbols M12 to M17).

With respect to the carbon material for a catalyst carrier prepared as above in each of Experimental Examples 12 to 17, the BET specific surface area S_{BET}, the increment ΔV_{Hg:4.3-4.8} of the mercury absorption amount in the mercury porosimetry, the nitrogen gas adsorption amount V_{N:0.4-0.8}, the full width at half maximum ΔG of the G-band peak at 1580 cm⁻¹ of a Raman spectrum, and the branch diameter were measured.

The results are shown in Table 2.

### <<Experimental Examples 18 to 24>>

The concentration of the silver nitrate was fixed at 25% by mass, the reaction temperature was fixed at 45°C, and the number of blow-in ports in blowing an acetylene gas was fixed at 4 in the above acetylide producing step for synthesizing silver acetylide. Further, the temperature at the third heat treatment step was changed in the range of 1600 to 2400°C. Except the above, silver acetylide was synthesized in the same manner as in Experimental Examples 1 to 11.

Using the thus prepared silver acetylide, the first heat treatment step, the second heat treatment step, the washing treatment step, and the third heat treatment step were carried out in the same manner as in Experimental Examples 1 to 11 to prepare the respective carbon materials for a catalyst carrier of Experimental Examples 18 to 24 (Experiment Symbols M18 to M24).

With respect to the carbon material for a catalyst carrier prepared as above in each of Experimental Examples 18 to 24, the BET specific surface area S_{BET}, the increment ΔV_{Hg:4.3-4.8} of the mercury absorption amount in the mercury porosimetry, the nitrogen gas adsorption amount V_{N:0.4-0.8}, the full width at half maximum ΔG of the G-band peak at 1580 cm⁻¹ of a Raman spectrum, and the branch diameter were measured.

The results are shown in Table 2.

### <<Experimental Examples 25 to 31>>

In addition, commercially available carbon materials were also examined in Experimental Examples 25 to 31.

As porous carbon materials, a porous carbon material A (KETJENBLACK EC300, produced by Lion Specialty Chemicals Co., Ltd.) (Experimental Example 25), and a porous carbon material B (KETJENBLACK EC600JD, produced by Lion Specialty Chemicals Co., Ltd.) (Experimental Examples 26, 27, and 28), each having a dendritic structure with well-developed pores, and a large specific surface area, were used; as a typical porous carbon material not having a dendritic structure, a porous carbon material C (CNOVEL-MH, produced by Toyo Carbon Co., Ltd.) (Experimental Example 29) was used; and as carbon materials having a well-developed dendritic structure, but not having a porous structure, a carbon material D (acetylene black (AB), produced by Denka Co., Ltd.) (Experimental Example 30), and a carbon material E (conductive grade #4300, produced by Tokai Carbon Co., Ltd.) (Experimental Example 31), were used. With respect to the porous carbon material B, three types were prepared based on the temperature at the third heat treatment, namely the porous carbon material B-1 treated at 1400°C, the porous carbon material B-2 treated at 1800°C, and the porous carbon material B-3 treated at 2000°C.

With respect to the carbon materials for a catalyst in each of Experimental Examples 25 to 31, the BET specific surface area S_{BET}, the increment ΔV_{Hg:4.3-4.8} of the mercury absorption amount in the mercury porosimetry, the nitrogen gas adsorption amount V_{N:4.3-4.8}, and the full width at half maximum ΔG of the G-band peak at 1580 cm⁻¹ of a Raman spectrum were measured.

The results are shown in Table 2.

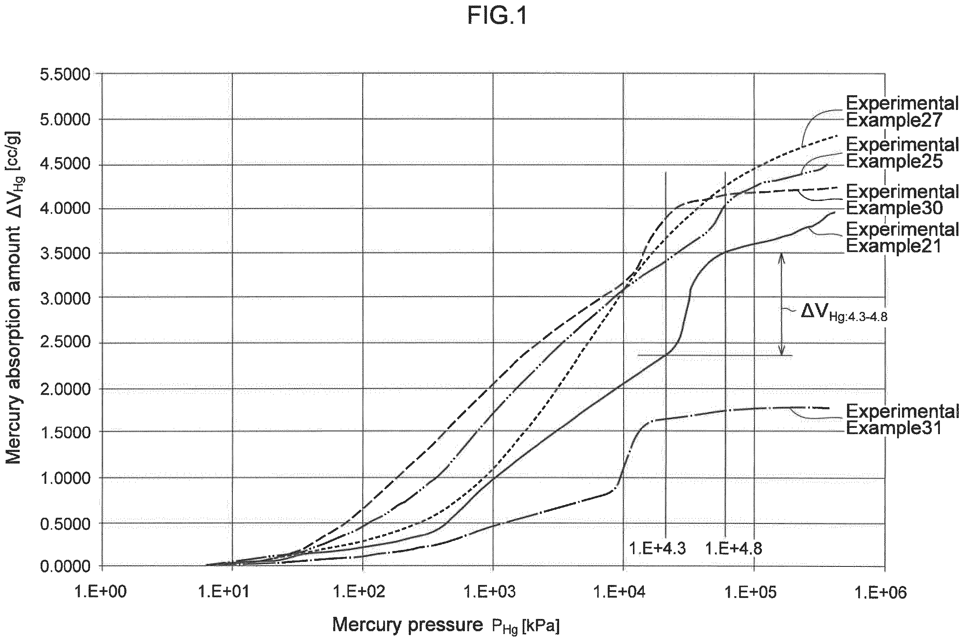

With respect to the carbon material for a catalyst carrier of Experimental Example 21, and the respective carbon materials of Experimental Example 25 (porous carbon material A), Experimental Example 27 (porous carbon material B-2), and Experimental Examples 30 and 31 (carbon material D and E), a P_{Hg} - V_{Hg} graph showing the relationship between the mercury pressure P_{Hg} (unit: kPa) and the mercury absorption amount V_{Hg} measured by the mercury porosimetry is shown in Figure 1. In the graph in Figure 1, the abscissa indicates a logarithmic scale (common logarithm).

Further, in Figure 1, the increment ΔV_{Hg:4.3-4.8} of the mercury absorption amount V_{Hg} measured in the mercury porosimetry when the common logarithm Log P_{Hg} of the mercury pressure P_{Hg} is increased from 4.3 to 4.8 in Experimental Example 21 is exemplified.

### <<Preparation of Catalyst, Production of Catalyst Layer, Preparation of MEA, Assembly of Fuel Cell, and Evaluation of Battery Performance>>

Next, using each of the thus produced or prepared carbon materials for a catalyst carrier, catalysts for a polymer electrolyte fuel cell, on which a catalyst metal was supported, were prepared as described below. Further, using an obtained catalyst, an ink solution for a catalyst layer was prepared. Next, using the ink solution for a catalyst layer, a catalyst layer was formed. Further, using the formed catalyst layer a membrane electrode assembly (MEA) was produced, and the produced MEA was fitted into a fuel cell, and a power generation test was performed using a fuel cell measuring device. Preparation of each component and cell evaluation by a power generation test will be described in detail below.

### (1) Preparation of Catalyst for Polymer Electrolyte Fuel Cell (Carbon Material Supporting Platinum)

Each of carbon materials for a catalyst carrier prepared as above, or commercially available carbon materials was dispersed in distilled water, and formaldehyde was added to the dispersion. The dispersion was placed in a water bath set at 40°C, and when the temperature of the dispersion reached the water bath temperature of 40°C, an aqueous nitric acid solution of a dinitrodiamine Pt complex was slowly poured into the dispersion with stirring. Then, stirring was continued for about 2 hours, the dispersion was filtrated, and the obtained solid was washed. The solid obtained in this way was dried in a vacuum at 90°C, then pulverized in a mortar. Next, the solid was heat-treated at 200°C in an argon atmosphere containing 5% by volume of hydrogen for 1 hour to yield a carbon material supporting platinum catalyst particles.

The supported platinum amount of the carbon material supporting platinum was regulated to 40% by mass with respect to the total mass of the carbon material for a catalyst carrier and the platinum particles, which was confirmed by a measurement based on inductively coupled plasma-atomic emission spectrometry (ICP-AES).

### (2) Preparation of Catalyst Layer

The carbon material supporting platinum (Pt catalyst) prepared as above was used. Further, Nafion (registered tradename ; produced by DuPont Co., Ltd., persulfonic acid-based ion exchange resin) was used as an electrolyte resin. The Pt catalyst and the Nafion were mixed in an Ar atmosphere, such that the mass of the Nafion solid component is 1.0 times as much as the mass of the carbon material supporting platinum catalyst particles, and 0.5 times as much as non-porous carbon. After stirring gently, the Pt catalyst was crushed by ultrasonic waves. The total solid concentration of the Pt catalyst and the electrolyte resin was adjusted to 1.0% by mass of by adding ethanol, thereby completing a catalyst layer ink solution in which the Pt catalyst and the electrolyte resin were mixed.

A catalyst layer ink solution for spray coating having a platinum concentration of 0.5% by mass was prepared by adding further ethanol to each catalyst layer ink solution having a solid concentration of 1.0% by mass, which was prepared as above. The catalyst layer ink solution for spray coating was sprayed on a Teflon (registered tradename) sheet after adjustment of spraying conditions such that the mass of platinum per unit area of catalyst layer (hereinafter referred to as "platinum basis weight") become 0.2 mg/cm². Then, a drying treatment was carried out in argon at 120°C for 60 min to complete a catalyst layer.

### (3) Preparation of MEA

An MEA (membrane electrode assembly) was produced by the following method using the catalyst layer prepared as above.

A square electrolyte membrane of 6 cm on a side was cut out from a Nafion membrane (NR 211 produced by DuPont Co., Ltd.). Each of the anode or cathode catalyst layer coated on a Teflon (registered tradename) sheet was cut out with a cutter knife into a square of 2.5 cm on a side.

Between the anode catalyst layer and the cathode catalyst layer cut out as above, the electrolyte membrane was inserted such that the two catalyst layers sandwich the central part of the electrolyte membrane tightly without misalignment from each other. Then the laminate was pressed at 120°C under a pressure of 100 kg/cm² for 10 min. After cooling down to room temperature, only the Teflon (registered tradename) sheets were peeled off carefully from the respective catalyst layers of the anode and the cathode to complete an assembly of the catalyst layers and the electrolyte membrane, in which the respective catalyst layers of the anode and the cathode are fixed to the electrolyte membrane.

Next, as a gas diffusion layer, a pair of square carbon paper sheets of 2.5 cm on a side were cut out from carbon paper (35 BC produced by SGL Carbon Co., Ltd.). The assembly of the catalyst layers and the electrolyte membrane was inserted between the carbon paper sheets, such that the respective catalyst layers of the anode and the cathode were placed without misalignment, then the laminate was pressed at 120°C under a pressure of 50 kg/cm² for 10 min, to compete an MEA.

The basis weights of the catalyst metal component, the carbon material, and the electrolyte material in each of the produced MEA were calculated based on the mass of a catalyst layer fixed to the Nafion membrane (electrolyte membrane) found from the difference between the mass of the Teflon (registered tradename) sheet with the catalyst layer before pressing and the mass of the peeled Teflon (registered tradename) sheet after pressing, and the mass ratio of the components in the catalyst layer.

### (4) Evaluation of Performance of Fuel Cell

An MEA produced using the carbon material for a catalyst carrier produced or prepared in each Experimental Example was fitted into a cell, which was then set on a fuel cell measuring apparatus, and the performance of the fuel cell was evaluated by the following procedure.

With respect to the reactive gases, on the cathode side air was supplied, and on the anode side pure hydrogen was supplied at a back pressure of 0.10 MPa by regulating the pressure with a back pressure regulating valve placed downstream of the cell so that the respective utilization rates became 40% and 70%. Meanwhile, the cell temperature was set at 80°C, and the supplied reactive gases on both the cathode and anode sides were bubbled through distilled water kept at 80°C in a humidifier, and the power generation in a low humidification state was evaluated.

Under such conditions, and supplying the reactive gasses to the cell, the load was gradually increased, and an inter-terminal voltage of the cell was recorded as the output voltage at the then current, after the cell was kept at a current density of 100 mA/cm², and 1000 mA/cm² respectively for 2 hours, and the power generation performance of the fuel cell was evaluated. The power generation performance of each obtained fuel cell was classified to the following four ranks of A, B, C, and D according to the output voltage at either of current densities. Among the ranks of 100 mA/cm² and 1000 mA/cm², with respect to the current density of 100 mA/cm² the lowest acceptable rank was B, and with respect to the current density of 1000 mA/cm² the lowest acceptable rank was C. The results are shown in Table 2.

### <Ranking Criteria>

### [Output Voltage at 100 mA/cm²]

A: The output voltage is not less than 0.86 V.
B: The output voltage is not less than 0.85 V and less than 0.86 V.
C: The output voltage is not less than 0.84 V and less than 0.85 V.
D: The output voltage is inferior to C.

### [Output Voltage at 1000 mA/cm²]

A: The output voltage is not less than 0.65 V
B: The output voltage is not less than 0.62 V and less than 0.65 V.
C: The output voltage is not less than 0.60 V and less than 0.62 V.
D: The output voltage is inferior to C.

Subsequently, in order to evaluate the durability, a durability test was performed, in which a cycle of operations that "the inter-terminal voltage of the cell was kept at 0.6 V for 4 sec, then the inter-terminal voltage of the cell was raised to 1.2 V and held for 4 sec, and then the inter-terminal voltage of the cell was returned to 0.6 V" was repeated for 300 cycles.

After the durability test, the battery performance (output voltage at 1000 mA/cm² after the durability test) was measured in the same manner as in the evaluation test of the initial performance before the durability test.

The output voltage decay rate was calculated by finding the decrement ΔV of the output voltage by deducting the output voltage (V) after the durability test from the output voltage before the durability test, and dividing the decrement ΔV by the output voltage before the durability test, and based on the calculated output voltage decay rate, evaluation was performed on the basis of acceptable ranks A (less than 10%) and B (from 10% to less than 15%), and an unacceptable rank C (higher than 15%). The results are shown in the table.

**[Table 1]**

| | Experiment symbol | Synthesis conditions for silver acetylide | | | Temperature at 3rd heat treatment | Remarks |
|---|---|---|---|---|---|---|
| | | AgNO₃ concentration | Reaction temperature | Number of blow-in ports | | |
| | | % by mass | °C | | °C | |
| Experimental Example 1 | M1 | 1 | 25 | 1 | 2000 | N |
| Experimental Example 2 | M2 | 3 | 25 | 1 | 2000 | N |
| Experimental Example 3 | M3 | 5 | 25 | 1 | 2000 | N |
| Experimental Example 4 | M4 | 8 | 25 | 1 | 2000 | N |
| Experimental Example 5 | M5 | 10 | 25 | 1 | 2000 | G |
| Experimental Example 6 | M6 | 15 | 25 | 1 | 2000 | G |
| Experimental Example 7 | M7 | 20 | 25 | 1 | 2000 | G |
| Experimental Example 8 | M8 | 25 | 25 | 1 | 2000 | G |
| Experimental Example 9 | M9 | 28 | 25 | 1 | 2000 | G |
| Experimental Example 10 | M10 | 30 | 25 | 1 | 2000 | N |
| Experimental Example 11 | M11 | 35 | 25 | 1 | 2000 | N |
| Experimental Example 12 | M12 | 20 | 25 | 2 | 2000 | G |
| Experimental Example 13 | M13 | 20 | 25 | 4 | 2000 | G |
| Experimental Example 14 | M14 | 20 | 35 | 4 | 2000 | G |
| Experimental Example 15 | M15 | 20 | 40 | 4 | 2000 | G |
| Experimental Example 16 | M16 | 20 | 45 | 4 | 2000 | G |
| Experimental Example 17 | M17 | 20 | 50 | 4 | 2000 | G |
| Experimental Example 18 | M18 | 25 | 45 | 4 | 1600 | G |
| Experimental Example 19 | M19 | 25 | 45 | 4 | 1800 | G |
| Experimental Example 20 | M20 | 25 | 45 | 4 | 1900 | G |
| Experimental Example 21 | M21 | 25 | 45 | 4 | 2100 | G |
| Experimental Example 22 | M22 | 25 | 45 | 4 | 2200 | G |
| Experimental Example 23 | M23 | 29 | 45 | 4 | 2300 | N |
| Experimental Example 24 | M24 | 25 | 45 | 4 | 2400 | N |
| Experimental Example 25 | Porous carbon material A | | | | 1800 | N |
| Experimental Example 26 | Porous carbon material B-1 | | | | 1400 | N |
| Experimental Example 27 | Porous carbon material B-2 | | | | 1800 | N |
| Experimental Example 28 | Porous carbon material B-3 | | | | 2000 | N |
| Experimental Example 29 | Porous carbon material C | | | | 1800 | N |
| Experimental Example 30 | Carbon material D | | | | - | N |
| Experimental Example 31 | Carbon material E | | | | - | N |

**[Table 2]**

| | Experiment symbol | Carbon material for a catalyst carrier | | | | | Battery power generation characteristics and durability | | | Remarks |
|---|---|---|---|---|---|---|---|---|---|---|
| | | S_{BET} | ΔV_{Hg:4.3-0.8} | V_{N:0.4-0.8} | ΔG | Branch diameter | Ranking at 100 mA/cm² | Ranking at 1000 mA/cm² | Durability | |
| | | m²/g | cc/g | cc(STP)/g | cm⁻¹ | nm | | | | |
| Experimental Example 1 | M1 | 1150 | 0.71 | 85 | 58 | 84 | B | D | A | N |
| Experimental Example 2 | M2 | 1140 | 0.73 | 90 | 58 | 86 | B | D | A | N |
| Experimental Example 3 | M3 | 1130 | 0.72 | 90 | 57 | 84 | B | D | A | N |
| Experimental Example 4 | M4 | 1110 | 0.81 | 110 | 58 | 82 | C | C | A | N |
| Experimental Example 5 | M5 | 1100 | 0.82 | 120 | 58 | 80 | B | C | A | G |
| Experimental Example 6 | M6 | 1090 | 0.82 | 135 | 58 | 76 | B | B | A | G |
| Experimental Example 7 | M7 | 1080 | 0.85 | 150 | 58 | 72 | B | A | A | G |
| Experimental Example 8 | M8 | 1080 | 0.88 | 165 | 59 | 70 | B | A | A | G |
| Experimental Example 9 | M9 | 1090 | 0.91 | 180 | 56 | 70 | B | A | A | G |
| Experimental Example 10 | M10 | 360 | <0.1 | 20 | 45 | 120 | D | D | A | N |
| Experimental Example 11 | M11 | 290 | <0.1 | 15 | 45 | 124 | D | D | A | N |
| Experimental Example 12 | M12 | 1070 | 0.95 | 160 | 59 | 70 | B | A | A | G |
| Experimental Example 13 | M13 | 1070 | 0.97 | 165 | 60 | 70 | B | A | A | G |
| Experimental Example 14 | M14 | 1070 | 1.07 | 175 | 61 | 68 | B | A | A | G |
| Experimental Example 15 | M15 | 1060 | 1.25 | 180 | 62 | 66 | A | A | A | G |
| Experimental Example 16 | M16 | 1060 | 1.33 | 185 | 62 | 64 | A | A | A | G |
| Experimental Example 17 | M17 | 1050 | 1.42 | 175 | 63 | 60 | A | B | A | G |
| Experimental Example 18 | M18 | 1480 | 1.31 | 285 | 69 | 64 | A | A | B | G |
| Experimental Example 19 | M19 | 1320 | 1.32 | 235 | 66 | 64 | A | A | B | G |
| Experimental Example 20 | M20 | 1190 | 1.34 | 215 | 64 | 64 | A | A | B | G |
| Experimental Example 21 | M21 | 580 | 1.15 | 175 | 58 | 64 | A | B | A | G |
| Experimental Example 22 | M22 | 450 | 0.94 | 145 | 54 | 62 | B | B | A | G |
| Experimental Example 23 | M23 | 385 | 0.82 | 95 | 49 | 58 | D | B | A | N |
| Experimental Example 24 | M24 | 320 | 0.77 | 80 | 41 | 58 | D | D | A | N |
| Experimental Example 25 | Porous carbon material A | 410 | <0.1 | 105 | 52 | - | B | D | B | N |
| Experimental Example 26 | Porous carbon material B-1 | 1200 | <0.1 | 382 | 66 | - | B | D | C | N |
| Experimental Example 27 | Porous carbon material B-2 | 520 | <0.1 | 200 | 50 | - | B | D | B | N |
| Experimental Example 28 | Porous carbon material B-3 | 360 | <0.1 | 126 | 39 | - | D | D | B | N |
| Experimental Example 29 | Porous carbon material C | 1280 | <0.1 | 28 | 48 | - | B | D | A | N |
| Experimental Example 30 | Carbon material D | 85 | <0.1 | 310 | 42 | - | D | D | A | N |
| Experimental Example 31 | Carbon material E | 35 | <0.1 | 12 | 44 | - | D | D | A | N |

The entire contents of the disclosures by Japanese Patent Application No. 2017-070830 are incorporated herein by reference.

All the Document, patent application, and technical standards cited herein are also herein incorporated to the same extent as provided for specifically and severally with respect to an individual Document, patent application, and technical standard to the effect that the same should be so incorporated by reference.

## Claims

1. A carbon material for a catalyst carrier of a polymer electrolyte fuel cell, which is a porous carbon material with a three-dimensionally branched three-dimensional dendritic structure, having a branch diameter of 81 nm or less, and simultaneously satisfying the following conditions (A) and (B):
(A) a BET specific surface area S_{BET} obtained by a BET analysis of a nitrogen gas adsorption isotherm is from 400 to 1500 m²/g; and
(B) with respect to a relationship between a mercury pressure P_{Hg} (kPa) and a mercury absorption amount V_{Hg} measured by mercury porosimetry, an increment ΔV_{Hg:4.3-4.8} of the measured mercury absorption amount V_{Hg} is from 0.82 to 1.50 cc/g in a case in which a common logarithm Log P_{Hg} of the mercury pressure P_{Hg} has increased from 4.3 to 4.8.

2. The carbon material for a catalyst carrier of a polymer electrolyte fuel cell according to claim 1, wherein a nitrogen gas adsorption amount V_{N:0.4-0.8} adsorbed between a relative pressure p/po from 0.4 to 0.8 in the nitrogen gas adsorption isotherm is from 100 to 300 cc(STP)/g.

3. The carbon material for a catalyst carrier of a polymer electrolyte fuel cell according to claim 1 or 2, wherein a full width at half maximum ΔG of a G-band peak detected in the vicinity of 1580 cm⁻¹ of a Raman spectrum is from 50 to 70 cm⁻¹.

4. The carbon material for a catalyst carrier of a polymer electrolyte fuel cell according to any one of claims 1 to 3, wherein the increment ΔV_{Hg:4.3-4.8} of the measured mercury absorption amount V_{Hg} is from 0.85 to 1.40 cc/g in a case in which the common logarithm Log P_{Hg} of the mercury pressure P_{Hg} has increased from 4.3 to 4.8.

5. A method of producing a carbon material for a catalyst carrier of a polymer electrolyte fuel cell, the method comprising:
producing an acetylide by blowing an acetylene gas into a reaction solution comprising an aqueous ammonia solution of silver nitrate, to synthesize silver acetylide,
a first heat treatment of heat-treating the silver acetylide at a temperature of from 40 to 80°C to prepare a silver particle-encapsulated intermediate;
a second heat treatment of causing a self-decomposing and explosive reaction of the silver particle-encapsulated intermediate at a temperature of from 120 to 400°C, to yield a carbon material intermediate;
a washing treatment of bringing the carbon material intermediate into contact with an acid to clean the carbon material intermediate; and
a third heat treatment of heat-treating the cleaned carbon material intermediate in a vacuum, or an inert gas atmosphere, at a temperature of from 1400 to 2300°C to yield a carbon material for a catalyst carrier,
wherein, in producing the acetylide, a concentration of silver nitrate in the reaction solution is adjusted to from 10 to 28% by mass at a time of preparing the reaction solution, and a temperature of the reaction solution is raised to from 25 to 50°C.

6. The method of producing a carbon material for a catalyst carrier of a polymer electrolyte fuel cell according to claim 5, wherein, in producing the acetylide, the acetylene gas is blown into the reaction solution from a plurality of blow-in ports.

7. The method of producing a carbon material for a catalyst carrier of a polymer electrolyte fuel cell according to claim 6, wherein the acetylene gas is blown into the reaction solution from from two to four blow-in ports.

8. The method of producing a carbon material for a catalyst carrier of a polymer electrolyte fuel cell according to claim 6 or 7, wherein the plurality of blow-in ports for blowing the acetylene gas into the reaction solution are arranged along a liquid surface rim of the reaction solution at regular intervals.
